# EUROPEAN PATENT APPLICATION

(11) **EP 4 407 575 A1**
(43) Date of publication of application: **31.07.2024**
(21) Application number: 23153672.3
(22) Date of filing: 27.01.2023
(51) Int. Cl.: G07F 17/12, G07C 9/00, G07F 9/00, G07F 9/02

(54) **A LOCKER BANK SYSTEM FOR ITEM DEPOSIT AND COLLECTION INTEGRATING A LOCKER BANK TOOLBOX**

(71) Applicant: Quadient Technologies France, 92220 Bagneux (FR)
(72) Inventor: ADELL, Arnaud, 84310 Morières Les Avignon (FR); YVOZ, Arnaud, 84300 Taillades (FR)
(74) Representative: Cabinet Beau de Loménie

(57) **Abstract**

A locker bank system for an item deposit and collection comprising: an electronic locker bank comprising a controller system configured to manage a compartment equipped with an electronically controlled door for securing a temporary storage of the item communicating with a first mobile device via a short-distance communication network, a locker banks server communicating with the first mobile device via a long-distance communication network, characterized in that the first mobile device comprises a user mobile application integrating a locker bank toolbox packaging all required components for allowing for the first mobile device to interact with the electronic locker bank, wherein the locker bank toolbox comprise a high-level methods pack configured to be called by the user mobile application, and wherein the locker bank toolbox can be integrated into or removed from the user mobile application without impacting the user mobile application other than for interacting with the electronic locker bank.

## Description

### FIELD OF THE INVENTION

The present invention relates to a system and methods for depositing items or shipments into electronic locker banks and for picking-up these items or shipments thereafter by a recipient.

### PRIOR ART - BACKGROUND OF THE INVENTION

Electronic locker bank systems are used for dropping-off, storing and picking up various kinds of items. These electronic locker bank systems can be used by carrier agents for depositing shipments, which are then picked-up from the electronic locker bank by recipients or may eventually be collected by a carrier agent for freeing the electronic locker bank for other shipments, if the shipments are not picked up in due time by the recipients. In other applications, electronic locker bank systems can be used by a retailer who deposits in an electronic locker bank on the premises of the retailer store articles purchased by customers either on-line or in the store so that the customers can later pick-up their purchases from the electronic locker bank. A typical architecture for electronic locker bank systems generally comprises a network of electronic locker banks, all communicating directly with a remote lockers management system in charge of managing the network of electronic locker banks, and of also managing data exchanges with information systems of the retailer or of the carrier.

An electronic locker bank is often operated by a user with a man machine interface, such as a touchscreen, embedded in the electronic locker bank, in particular for the opening and closing of compartment doors of the lockers. More conveniently, some electronic locker banks can be operated with a mobile device, such as a personal digital assistant (PDA) or a smartphone, carried by the user of the electronic locker banks as described in patent EP3306577. The mobile device can be used for scanning shipments for reading identification barcodes. Such operation with a mobile device is particularly appropriate for smart autonomous compartments operating without any electrical power connection and relying only on replaceable electrical batteries as described in patent application EP3671665, or in the patent applications EP3671670 or EP3671671 for smart autonomous compartments clusters. For example, in the case of a carrier agent using a mobile device for operating electronic locker banks, the mobile device integrates a logistic application provided by the carrier for managing the shipments delivery and a locker bank application provided by the locker banks provider for operating the locker banks. A first issue with these two parallel applications is that two separate installations on each mobile device are required as well as the burden of handling two separate application packages. A second issue is that these two separate applications are not optimally integrated in the mobile device, and for example, a carrier agent would need to start and use the logistic application for managing a shipment delivery and then would need to start and use the locker bank application for operating the locker bank and depositing the shipment. In particular, the logistic application may require a scanning of the shipment for tracking the delivery process and the locker bank application may also require a scanning of the shipment for recognizing which shipment is stored in which compartment. As the two separate applications operate separately and do not communicate, the carrier agent would need to perform two successive scans: a first scan while using the logistic application and then a second scan while using the locker bank application. In the case of a customer of a retailer using a smartphone for picking-up an item for an electronic locker bank, his smartphone integrates a retailer application provided by the retailer and a locker bank application provided by the locker banks provider for operating the electronic locker bank. Similar issues as described above would result from having these two parallel applications. In particular, the customer of the retailer would have to specifically download on his smartphone the locker bank application, which could be distributed from public applications stores. This additional download complexifies the customer journey and would need to be avoided.

### OBJECT AND DEFINITION OF THE INVENTION

Disclosed are a system and a method, which seek to substantially overcome or ameliorate the disadvantages described above. This object is achieved by providing a locker bank system for an item deposit and collection comprising: an electronic locker bank comprising a controller system configured to manage a compartment equipped with an electronically controlled door for securing a temporary storage of the item communicating with a first mobile device via a short-distance communication network, a locker banks server communicating with the first mobile device via a long-distance communication network, characterized in that the first mobile device comprises a user mobile application integrating a locker bank toolbox packaging all required components for allowing for the first mobile device to interact with the electronic locker bank, wherein the locker bank toolbox comprise a high-level methods pack configured to be called by the user mobile application, and wherein the locker bank toolbox can be integrated into or removed from the user mobile application without impacting the user mobile application other than for interacting with the electronic locker bank.

As the service provider can integrate the locker bank toolbox into his user mobile application, there is no handling of two separate application packages (for the user mobile application and the locker bank application) and only one application installation is required. For the user, interacting with the electronic locker bank is a seamless experience as the locker bank toolbox is fully integrated in the user mobile application and the user has to login only in the user mobile application. Additionally, providing a set of high-level methods allows the service provider to adapt and optimize the interaction with the electronic locker bank according to his own processes and allows him to develop his specific eco-system.

According to a feature of the invention, the electronic locker bank includes a locker development kit comprising low-level components configured to be called by the high-level method for allowing interaction with the electronic locker bank. The low-level components of the Locker development kit are private and cannot be directly called by the user mobile application, while the high-level methods are public and can be directly called by the user mobile application.

In a preferred embodiment, the locker development kit comprises a short-distance communication module for the first mobile device to communicate wirelessly with the electronic locker bank via the short-distance communication network and the locker development kit comprises a long-distance communication module for the first mobile device to communicate with the locker banks server via the long-distance communication network allowing for the download of a configuration package from the locker banks server to the first mobile device.

So as to ensure a regular update of the configuration package, in a particular embodiment, the locker bank toolbox includes a package verification component configured to stop an execution of the high-level methods pack based on a package validity parameter stored in the configuration package and based on a package date stored in a toolbox memory associated with the locker bank toolbox. The package download date can be date of the latest download of the configuration package onto the user mobile device.

According to another feature of the invention, the locker bank toolbox includes a flood protection component configured to stop an execution of the high-level methods pack based on a call delay stored in the configuration package and based on a list of call times stored in the toolbox memory so as to prevent the locker development kit from being flooded by untimely calls. This component performs a comparison between the call delay and an elapsed time from a latest time when the high-level function had been called by using the latest time that the high-level method has been called, which is recorded in the list of call times.

Preferably, the locker bank toolbox includes a process component configured to stop an execution of the high-level methods pack based a process status stored in the toolbox memory and configured to update the process status when the high-level method is completed so as to ensure for coherence in the succession and for completion of the high-level methods executed by the user mobile application.

In another embodiment, the locker bank toolbox includes a communication channels component configured to verify whether the short-distance communication module and the long-distance communication module are operational and configured to stop an execution of the high-level method if the high-level methods pack requires using the short-distance communication network or the long-distance communication network.

According to a feature of the invention, the locker bank toolbox includes an argument verification component configured to verify a coherence of values of arguments associated with the high-level methods pack and provided by the user mobile application compared to a locker mapping stored in the toolbox memory.

Advantageously, the locker bank toolbox and the locker development kit are developed in a native software language so that the locker bank toolbox and the locker development kit can be compiled in any language used for the user mobile application.

In a preferred embodiment, the native software language is SWIFT or KOTLIN.

Preferably, the locker bank toolbox and the locker development kit are provided as a pre-compiled binary file for future compilation with a user mobile application.

According to another feature of the invention, a second mobile device comprises a locker bank application integrating the locker development kit, wherein the low-level components are configured to be called by the locker bank application.

Advantageously, the controller system includes a short-distance communication interface for communicating with the first mobile device and the second mobile device.

In a particular embodiment, each of the locker development kit and the electronic locker bank comprises a security module for encrypting and decrypting messages, and the security module of the locker development kit is configured for encrypting requests from the locker development kit to the electronic locker bank, and the security module of the electronic locker bank is configured for encrypting responses from the electronic locker bank to the locker development kit for local security.

The invention also concerns a method for the above locker bank system including: calling a high-level methods pack included in a locker bank toolbox and providing arguments associated with the high-level methods pack, checking for validity of a configuration package to establish a need for updating the configuration package, checking that an elapsed time from a latest time when the high-level function had been called is larger than a pre-stored call delay to prevent the locker bank toolbox from being flooded by untimely calls, checking for a value of a process status by comparing the value of the process status with a process value associated with the high-level method to ensure for coherence with and for completion of a previously called high-level method, and, if any of the three previous checkings is unsuccessful, stopping the execution of the high-level methods pack and returning an error message. The above and below checks are performed for securing a usage of the locker development kit comprised in the locker bank toolbox, and whose low-level functions are used by the high-level method.

In a particular embodiment, the method further comprises checking whether a short-distance communication module for the first mobile device to communicate wirelessly with the electronic locker bank via the short-distance communication network and a long-distance communication module for the first mobile device to communicate with the locker banks server via the long-distance communication network are operational, checking for coherence for values of arguments associated and provided with the high-level method, and, if any of the two previous checkings is unsuccessful, stopping the execution of the high-level methods pack and returning an error message.

Preferably, the checking for validity of a configuration package includes establishing a usage duration of the configuration package by subtracting from today's date a package date stored in a toolbox memory associated with the electronic locker bank, comparing the usage duration with a package validity stored in the configuration package, and establishing that the package is valid if the usage duration is smaller than the package validity.

Advantageously, the checking for communication channels includes accessing an API of an operating system of the mobile device for checking whether the short-distance communication module is active, returning a status of the short-distance communication network, accessing an API of an operating system of the mobile device for checking whether the long-distance communication module is active, and returning a status of the long-distance communication network.

In a particular embodiment, the checking for coherence for values of arguments includes comparing a format of each of the values of the arguments with pre-stored formats or format rules, or verifying a coherence of the values of the arguments compared to a pre-stored locker mapping, or checking whether each of the values of the arguments is comprised within a pre-defined range.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 illustrates a locker bank system embodying the present invention;
Figure 2 illustrates a Locker Bank Toolbox within a locker bank system of the invention;
Figure 3 shows a Locker Bank Toolbox embodying the present invention; and
Figure 4 illustrates a process for using a Locker Bank Toolbox for interacting with an electronic locker bank according to an embodiment of the invention.

### DETAILLED DESCRIPTION

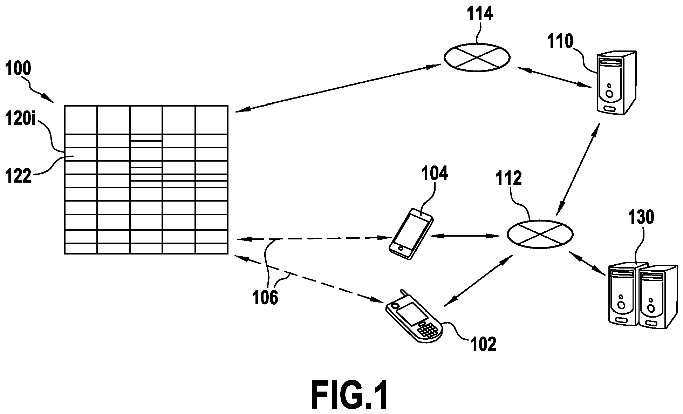

Figure 1 illustrates an embodiment of a locker bank system comprising an electronic locker bank 100 communicating with a user mobile device 102 or 104 via a wireless short-distance local communication network 106, and a remote Locker banks server 110, which manages authorization access to the electronic locker bank and data regarding the shipments handled by the electronic locker bank. The Locker banks server communicates with the user mobile device 102 or 104 via a long-distance communication network 112 based on a technology such as 3G-5G GSM. Data exchange between the electronic locker bank and the Locker banks server is performed via a long-distance communication network 114, which can be the same as the long-distance communication network 112. The Locker banks server can manage a network of electronic locker banks and can centralize data for the whole network of electronic locker banks. The electronic locker bank comprises a series of compartments 120i of different sizes and with each compartment equipped with an electronically controlled door 122i. The electronic locker bank can be used by a carrier for depositing shipments, which are then picked-up by recipients of these shipments, or can be used by a retailer for depositing articles purchased by their customers. Shipment deposit may take place in public outdoor or indoor locations, on the premises of various businesses or in appartement buildings or private communities. Retailers correspond to the various consumer goods vendors including sport or home improvement goods or pharmacies. Information systems 130 of the carrier or of the retailer communicate with the Locker banks server for managing shipments and articles delivery and collection via a long-distance communication network, which can be the same as the long-distance communication network 112. The Locker banks server can centralize data for multiple information systems of different retailers or carriers. The electronic locker bank can be operated for depositing retail articles or shipments with the mobile device 102, such as a personal digital assistant or a smartphone, carried by a retailer agent or a carrier agent. The electronic locker bank can also be operated for picking-up retail articles or shipments with the mobile device 104, such as a smartphone, carried by a retailer customer or a shipment recipient. The information systems 130 of the carrier or of the retailer communicate with the mobile device 102 of the retailer agent or of the carrier agent and with the mobile device 104 of the retailer customer or of the shipment recipient via a long-distance communication network, which can be the same as the long-distance communication network 112.

In a particular embodiment, there is no direct long-distance communication connection between the electronic locker bank and the remote Locker banks server, and no data is directly exchanged via any long-distance communication network between the electronic locker bank and the remote Locker banks server. Data exchange between the electronic locker bank and the remote Locker banks server is performed via the mobile device 102 of the retailer agent or of the carrier agent, or via the mobile device 104 of the retailer customer or of the shipment recipient.

The electronic locker bank operation, and in particular the opening and closing of the compartment doors, can be controlled by a central control unit, which also controls the communication with the user mobile devices. In a preferred embodiment, each compartment can be controlled by a dedicated locking module, which also controls the communication with the user mobile devices. In another embodiment, the electronic locker bank includes several cluster locking modules, where each cluster locking module controls several compartments grouped into a compartment cluster, and also enables the communication with the user mobile devices.

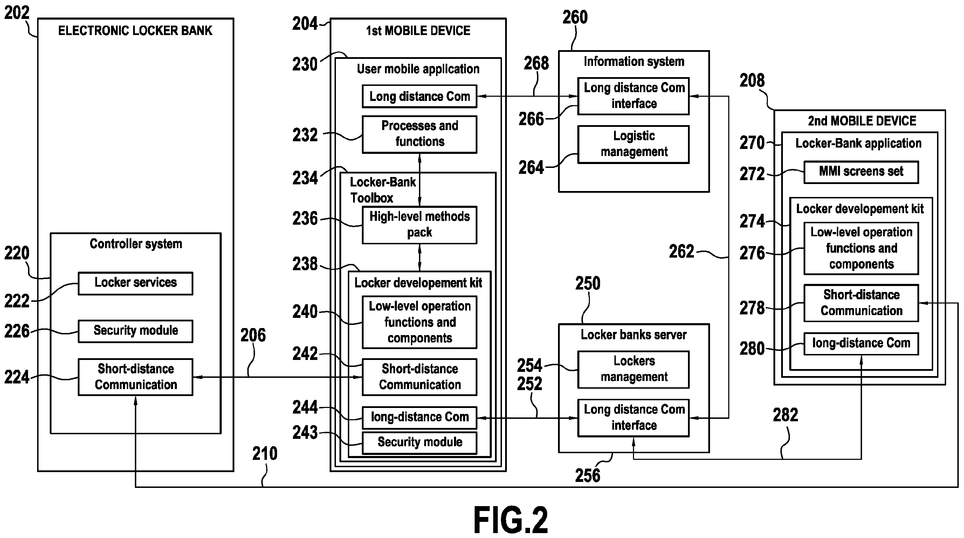

Figure 2 illustrates an embodiment of a locker bank system of the invention comprising an electronic locker bank 202 communicating with a first mobile device 204 via a short-distance communication network 206, such as wireless local network WIFI or Bluetooth, and communicating with a second mobile device 208 via a short-distance communication network 210. The electronic locker bank comprises a controller system 220 including locker services 222 for managing a compartment equipped with an electronically controlled door and provided for handling shipments or retailer articles. The controller system also includes a short-distance communication interface 224 for communicating with mobile devices of users of the electronic locker bank localized near the electronic locker bank. Preferably, requests from the first mobile device to the electronic locker bank can be decrypted by a security module 226, and responses from the electronic locker bank to first mobile device can be encrypted by the security module 226. The controller system can be a centralized system operating the whole electronic locker bank and in particular performing the opening and closing of all the compartment doors of the electronic locker bank. In a preferred embodiment, the electronic locker bank comprises several controller systems, each being dedicated to a compartment or to a compartments cluster grouping a few compartments together.

The first mobile device 204 can be used for interacting with the electronic locker bank as part of a more general commercial service offered by a service provider such as a tracking and delivering of shipments by a carrier agent or a management of orders for a customer of a retailer. A user mobile application 230 is installed and runs on the first mobile device for providing the user with the commercial service. The user mobile application may have been installed before the first mobile device being provided to the user or may have been downloaded from an app store. The commercial service is carried out by user processes and functions 232 included in the user mobile application, and which are made available to the user via the man machine interface of the first mobile device. A Locker Bank Toolbox 234 is integrated in the user mobile application and allows for the user of the first mobile device to interact with the electronic locker bank. The locker bank toolbox comprises a high-level methods pack 236 including high-level methods, which can be called by the user processes and functions of the user mobile application when interaction with the electronic locker bank is required. This high-level methods pack is a necessary functional block for a user of the electronic locker bank to interact with the electronic locker bank.

The locker bank toolbox of the invention provides multiple benefits. As the service provider can integrate the locker bank toolbox into his user mobile application, there is no handling of two separate application packages (for the user mobile application and the locker bank application) and only one application installation is required. For the user, interacting with the electronic locker bank is a seamless experience as the locker bank toolbox is fully integrated in the user mobile application and the user has to login only in the user mobile application. Additionally, providing a set of high-level methods allows the service provider to adapt and optimize the interaction with the electronic locker bank according to his own processes and allows him to develop his specific eco-system. The high-level methods call low-level components for operating the electronic locker bank included in a Locker development kit 238 comprising low-level operation functions and components 240 such as functions for opening compartment doors or for managing data regarding shipments/articles or compartments status or components for reading door status or lock status. The high-level methods are public and can be directly called by the user mobile application. The low-level components of the Locker development kit are private and cannot be directly called by the user mobile application. The Locker development kit also comprises a short-distance communication module 242 for the first mobile device to communicate wirelessly with the electronic locker bank via the short-distance communication network 206. In a preferred embodiment, requests from the Locker development kit to the electronic locker bank are encrypted for local security by a security module 243 and decrypted by the security module 226 of the electronic locker bank, and responses from the electronic locker bank to the Locker development kit also are encrypted by the security module 226 and then decrypted by the security module 243. Additionally, the Locker development kit comprises a long-distance communication module 244 for the first mobile device to communicate with a remote Locker banks server 250 via the long-distance communication network 252. The locker bank toolbox is generally provided by a locker banks provider with a network of electronic locker banks and the remote Locker banks server. The locker bank toolbox constitutes a complete package grouping all required components for allowing for the first mobile device to interact with the electronic locker bank via the high-level methods, which connect with the low-level components of the Locker development kit. The locker bank toolbox can easily be integrated into the user mobile application without impacting the user mobile application operation other than adding the capability for interacting with the electronic locker bank. Also, the locker bank toolbox can easily be removed from the user mobile application without impacting the user mobile application operation other than removing the capability for interacting with the electronic locker bank.

The Locker banks server 250 includes a locker banks management module 254 for managing the electronic locker bank 202 as well as for managing a network of electronic locker banks and for centralizing data for the whole network of electronic locker banks. The Locker banks server includes a long-distance communication interface 256 for electronic data exchange with the first mobile device via the long-distance communication network 252. This communication channel is used for requests from the low-level operation functions 240 such as for authenticating a user of the first mobile device, which is performed by the Locker banks server, or for reporting locker events to the Locker banks server by low-level operation components 240 following on interactions of the low-level operation components with locker services of the electronic locker bank via the short-distance communication network 206. The long-distance communication network 252 is also used by the locker bank server to provide data to the locker development kit 238 such as a configuration package at the request of a low-level operation function for updating the operational configuration of the locker development kit. The operational configuration allows for optimizing the operation of the first mobile device with the electronic locker bank. The configuration package includes for example parameters for setting the short-distance communication network operation. The parameters of the operational configuration need to be tuned according to the local environment of the electronic locker bank, and need to be regularly updated as the first mobile device and the electronic locker bank operation is improved or adapted.

The Locker banks server communicates with an information system 260 of the service provider via a long-distance communication network 262. The information system includes a logistics management module for handling shipments or articles delivery and collection. Via a long-distance communication interface 266, the information system can provide logistics information to the Locker banks server such as with an announcement of the shipments or articles, which should be deposited in the electronic locker bank. Also, the Locker banks server can provide the information system with locker information for tracking shipments or articles deposited in or to be collected from the electronic locker bank. The information system also communicates with the first mobile device via a long-distance communication network 268, which may be the same as long-distance communication network 266, to provide information relative to the service offered by user mobile application 230.

The electronic locker bank can be used by a carrier for depositing shipments which are then picked-up by recipients of these shipments, or by a retailer for depositing articles purchased by their customers. In the case of a carrier usage, a carrier agent is provided with a first mobile device 204, which the carrier agent can use for depositing shipments in or collecting shipments from the electronic locker bank. A carrier mobile application 230, integrating the Locker Bank Toolbox, has been installed on the first mobile device. In a particular embodiment, when the carrier agent initiates a process or function of the carrier mobile application for interacting with the electronic locker bank, his credentials need to be provided to a login high-level method, which calls a low-level authentication function for authenticating the carrier agent. The low-level authentication function provides the credentials to the Locker banks server and requests an authentication. Following on a successful authentication, the carrier agent can then interact with the electronic locker bank with his first mobile device. The announcement of shipments, which are to be deposited in the electronic locker bank, provided by carrier information system 260 to the Locker banks server can then be transferred to the first mobile device by the Locker banks server via a long-distance communication network 252. Data provided with the announcement are then handled by the locker development kit for performing a deposit process according to the user mobile application installed on the first mobile device and for guiding the carrier agent.

In the case of a retailer usage, a customer of a retailer, using and generally owning the first mobile device, is provided with a retailer user mobile application 230 integrating the Locker Bank Toolbox. The retailer offers this user mobile application to his customer for ordering on-line, displaying offers, proposing advice or fidelity schemes, referring to past orders or tracking purchased articles. The retailer information system 260 exchanges data with the retailer user mobile application regarding offers, past orders or the customer ordering on-line and announces to the locker bank server 250 the deposit of articles to be picked-up by customers of the retailer. Once an article has been deposited in the electronic locker bank 202 by a retailer agent, data relative to the deposit are sent by the Locker development kit to the Locker banks server, which are then sent to the retailer information system. Then, a notification can be sent to the customer of the retailer by the Locker banks server or by the retailer information system, alerting the customer that his article can be pick-up in the electronic locker bank and providing him with an access code.

When a user only needs to have access to the electronic locker bank independently from other services, a dedicated locker bank application 270 can be installed on the second mobile device 208. The locker bank application is provided by the locker banks provider and is generally downloaded onto the second mobile device from an app store. The locker bank application can be started when the user needs to interact with the electronic locker bank and comprises a set of MMI screens 272 allowing the user to navigate the application and to access the services he needs. The locker bank application also includes a Locker development kit 274 comprising low-level operation functions and components 276, such as functions for opening compartment doors or for managing data regarding shipments/articles or compartments status or components for reading door status or lock status, which are called from the MMI screens for operating the electronic locker bank. The Locker development kit also comprises a short-distance communication module 278 for the second mobile device to communicate wirelessly with the electronic locker bank via the short-distance communication network 210.

In the case of a carrier usage, the second mobile device 208 can be used by the recipient of a shipment deposited by a carrier agent in the electronic locker bank. During the shipment deposit by the carrier agent in the electronic locker bank, deposit information is uploaded from the first mobile device of the carrier agent to the Locker banks server, and the recipient can be notified of the deposit by the Locker banks server or by the carrier information system. In the case of a retailer usage, a retailer agent is provided with a second mobile device 208, which the retailer agent can use for depositing articles ordered by customers of the retailer in the electronic locker bank or eventually for collecting articles, which have not been picked-up from the electronic locker bank. The second mobile device integrates a locker bank application 270 provided by the locker banks provider to the retailer for the retailer agent to be able to interact with the electronic locker bank. Following on an announcement of articles, which are to be deposited in the electronic locker bank, provided by retailer information system 260 to the Locker banks server, the announcement is transferred by the Locker banks server to the first mobile device via a long-distance communication network 282. Data provided with the announcement are then handled by the locker development kit 274 integrated in the locker bank application. Then, following on the deposit of articles by a retailer agent in the electronic locker bank or eventually following on the deposit on the collection of articles, which have not been picked-up from the electronic locker bank, by a retailer agent, deposit or collection events are uploaded by the locker bank application to the Locker banks server via the long-distance communication network 282.

In a particular embodiment, the second mobile device 208 integrating a locker bank application 270 also can be used by the recipient of a shipment for returning the shipment or by a shipper who needs to send an article that he has for example sold on-line to a buyer. For these particular usages, the locker bank application 270 incudes corresponding MMI screens and elements for returning shipments or sending articles, so they can be dropped off in the electronic locker bank and then collected by a carrier agent.

However, if the interaction with the electronic locker bank needs to be integrated within an application offering other services than those offered by the locker banks provider - for example within a recipient application developed by a carrier for a recipient mobile device for shipment pick-up or shipment return, within a shipper application developed by a carrier for a shipper mobile device for sending shipments, or within a retailer application developed by a retailer for a retailer agent mobile device for article deposit or article collection - then the Locker Bank Toolbox needs to be used and integrated in this application offering other services.

It is most advantageous that the locker bank toolbox and the high-level methods pack and the locker bank application and the locker development kit be conceived and developed so that a same locker development kit can be integrated in the locker bank toolbox and in the locker bank application, and then used for any application requiring interacting with the electronic locker bank including within a carrier application developed by a carrier for a carrier agent mobile device for shipments deposit or shipments collection, within a recipient application developed by the locker bank provider or by a carrier for a recipient mobile device for shipment pick-up or shipment return, within a shipper application developed by the locker bank provider or by a carrier for a shipper mobile device for sending shipments, within the retailer customer application developed by a retailer for a customer mobile device for article pick-up or article return, or within a retailer application developed by the locker bank provider or by a retailer for a retailer agent mobile device for article deposit or article collection.

To facilitate the integration of the Locker Bank Toolbox or the locker development kit into any user mobile application, the preferred solution is to develop the Locker Bank Toolbox and the locker development kit in a native software language. Currently, only a code developed in a native language of a mobile platform can be compiled with a user code developed in any kind of language and used on the mobile platform. To address the two main mobile platforms iOS and Android, the Locker Bank Toolbox and the locker development kit need to be developed in two versions: a version developed in the SWIFT language for the iOS platform and a version in the KOTLIN language for the Android platform. The Locker Bank Toolbox source code or the locker development kit source code, developed in the native language of a particular mobile platform is compiled and provided by the locker banks provider as a pre-compiled binary file to the service provider, who can compile it within his mobile application and distribute the resulting compiled file for use on the particular mobile platform.

Figure 2 illustrates a locker bank system architecture of the invention without direct long-distance communication connection between the electronic locker bank 202 and the remote Locker banks server 250, and no data is directly exchanged between the electronic locker bank and the remote Locker banks server. Data exchange between the electronic locker bank and the remote Locker banks server is performed via the mobile devices. In another embodiment, data exchange between the electronic locker bank and the remote Locker banks server can also be performed via a long-distance communication network, which can be the same as the long-distance communication network 268 or 282, and data exchanged between the electronic locker bank and the remote Locker banks server via the mobile devices according to figure 2, can then be exchanged directly between the electronic locker bank and the remote Locker banks server.

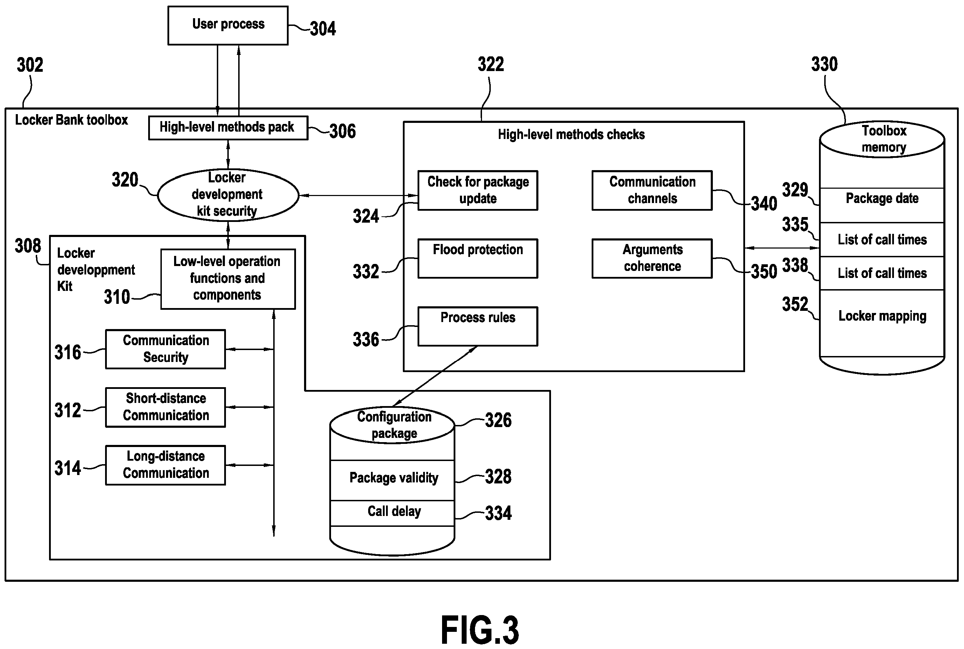

Figure 3 illustrates an embodiment of a Locker Bank Toolbox 302 of the invention developed and provided by a locker banks provider. The Locker Bank Toolbox can be integrated in a user mobile application, which includes a user process 304, and which is run on a user mobile device. The Locker Bank Toolbox includes a set of high-level methods integrated in high-level methods pack 306 and that the user process can call. The call must include appropriate information such as a shipment number and/or a shipment barcode for the high-level method deposit into a compartment of an electronic locker bank. The Locker Bank Toolbox also includes a Locker development kit 308 comprising low-level functions and components, which are used by the high-level methods. The Locker development kit comprises low-level operation functions and components 310 and some communication modules: a short-distance communication module 312 for communicating wirelessly with the electronic locker bank, a long-distance communication module 314 for communicating with the remote Locker banks server 250 and a communication security module 316. The short-distance communication module is designed for operating a short-distance communication hardware embedded in the user mobile device and the long-distance communication module is designed for operating a long-distance communication hardware embedded in the user mobile device. The communication security module manages the handling of an authenticator, which is used to prevent any communication and eventually any access to the electronic locker bank from an unauthorized device as described in EP3671671. The authenticator is generated by the remote Locker banks server and is provided to the electronic locker bank for authentication with any request from a mobile device for establishing a communication session with the electronic locker bank.

The number of high-level methods is limited to only some synthetic necessary functions so that the integration into the user mobile application is made simple. The primary high-level methods are the following: "Load" for deposit of shipments/articles in the electronic locker bank and opening door compartments, "LoadConfirm" confirming the deposit for informing the remote Locker banks server of the completion of the deposit, "Unload" for collecting of shipments/articles from the electronic locker bank and opening door compartments, "UnloadConfirm" confirming the collection for informing the remote Locker banks server of the completion of the collection, "DropOffAllow" for validating that the user is in front of the electronic locker bank and allowing him to perform a drop-off, "DropOff" for drop-off of shipments/articles in the electronic locker bank and opening door compartments, "DropOffConfirm" confirming the drop-off for informing the remote Locker banks server of the completion of the drop-off, "GetAuthenticator" for obtaining from the remote Locker banks server an authenticator required for a pick-up, "PickUp" for picking-up shipments/articles from the electronic locker bank and opening a door compartment based on the received authenticator, "PickUpConfirm" confirming the pick-up for informing the remote Locker banks server of the completion of the pick-up.

As the locker bank toolbox is integrated in a user mobile application developed by a service provider and operated by the user mobile application, which is out of the control of the locker banks provider, who develops and distributes the locker bank toolbox, it is preferable that checks can be performed to ensure some security in the usage of the locker development kit. When the locker development kit is integrated in a mobile application developed by the locker bank provider, such checks do not need to be packaged with the Locker development kit as security in the usage of the locker development kit can be implemented within the mobile application developed by the locker bank provider. The locker bank toolbox includes as part of the high-level methods pack 236 a Locker development kit security module 320, which is used when high-level methods are called by the user process, and high-levels methods checks components 322, which are used by the Locker development kit security module. A first check component 324 regards an update of a configuration package 326. The configuration package is a file included in the Locker development kit, which comprises parameters defined for an optimal operation of a mobile device with the electronic locker bank. The configuration package can be downloaded onto the user mobile device and needs to be updated regularly. Some parameters of the configuration package can be changed as required such as parameters characterizing the barcodes read on shipments or articles deposited in the electronic locker bank, or the URL of the remote Locker banks server. Other parameters of the configuration package can be adjusted for optimizing the system operation, for example depending on the environment of the electronic locker bank, such as parameters for wireless short-distance communication between the user mobile device and the electronic locker bank. The first check component ensures a regular update of the configuration package based on a package validity 328 stored in the configuration package in the form of a duration, typically one week, and based on a package date 329, which can correspond initially a date of a latest download of the configuration package onto the user mobile device. The package date is stored in a toolbox memory 330 associated with the Locker Bank Toolbox. If the configuration package is checked as not updated, the high-level method cannot be executed until an update of the configuration package is performed. A second check component 332 called flood protection component prevents the locker development kit from being flooded by untimely requests, eventually erroneous, from the user process based on a call delay 334 stored in the configuration package and based on a list of call times 335 stored in the toolbox memory and recording latest times that each of the high-level methods has been called by the user mobile application. Whenever a particular high-level method is called by the user process, the second check component performs a comparison between the call delay and an elapsed time from a latest time when the high-level function had been called by using the latest time that the high-level method has been called, which is recorded in the list of call times. In a particular embodiment, the call delay is identical for all the high-level methods. The call delay may also consist in a list of call delay values where each call delay value corresponds to a particular high-level method.

A third check component 336 regards coherence in the succession and completion of the high-level methods executed by the user process. This check prevents from a new high-level method being executed by the user process before a previous high-level method is correctly completed based on a process status 338 stored in the toolbox memory. The process status can take the following values: "null" (i.e. no value), "load" (during or following on a process for deposit in the electronic locker bank), "unload" (during or following on a process for collection from the electronic locker bank), "dropoff" (during or following on a process for drop-off into the electronic locker bank), "dropoffallow" (following on a process preceding a drop-off) or "pickup" (during or following on a process for pick-up from the electronic locker bank). A high-level method cannot start unless the process status has a specific value, and, after being performed, the high-level method ends with an update of the process status. The primary high-level methods are grouped in primary processes including: a deposit process, a collection process, a returning or sending process and a picking-up process. Each primary process is developed within the user mobile application by the service provider according to the specific user process and specific needs of the service provider. The third check component is configured for execution process rules for ensuring the coherence in the succession and completion of the high-level methods in particular regarding the primary processes. For the deposit process in the electronic locker bank of shipments by a carrier agent or of articles by a retailer agent, the process rules for the following high-level methods are: for Load to start the process status must have the value "null" and ends with the value "load", for LoadConfirm to start the process status must have the value "load" and ends with the value "null". For the returning or sending process in the electronic locker bank of shipments or of retailer articles, the process rules for the following high-level methods are: for DropOffAllow to start the process status must have the value "null" or "dropoffallow" and ends with the value "dropoffallow", for DropOff to start the process status must have the value "dropoffallow" or "dropoff" and ends with the value "dropoff", for DropOffConfirm to start the process status must have the value "dropoff", and ends with the value "null". For the collection process from the electronic locker bank of shipments by a carrier agent or of articles by a retailer agent, the process rules for the following high-level methods are: for Unload to start the process status must have the value "null" and ends with the value "unload", for LoadConfirm to start the process status must have the value "unload" and ends with the value "null". For the picking-up process from the electronic locker bank of a shipment or of a retailer article, the process rules for the following high-level methods are: for GetAuthenticator to start the process status must have the value "null" or "pickup" and ends with the value "pickup", for PickUp to start the process status must have the value "null" or "pickup" and ends with the value "pickup", for PickUpConfirm to start the process status must have the value "pickup" and ends with the value "null". The process rules and the process status ensure that any of the primary high-level methods must be completed and that a primary process cannot be started before a previous primary process is completed. For example, a deposit process or a collection process cannot start if the previous process has not been confirmed (resulting in a "null" value, which is a process status required for starting a new primary process).

A fourth check component 340 regards whether communication channels are active. For operating with the electronic locker bank and with the remote Locker banks server, the short-distance communication hardware and the long-distance communication hardware of the user mobile device need to be active. However, current standards and regulations for mobile application require that a communication channel cannot be automatically activated by an application, but that the user agrees for activating the communication channel. Therefore, the fourth check component verifies whether the communication channels are active, and therefore verifies whether the short-distance communication module 242 and the long-distance communication module 244 are operational. But the Locker Bank Toolbox cannot automatically activate the communication channels if they are not active, but only stops the execution of the high-level method until the communication channels are active. The request to the user for activating the communication channels must be performed by the user mobile application, which handles the MMI. A firth check component 350 regards the arguments associated with a high-level method and provided by the user mobile application when it is called by the user mobile application. The firth check component is configured for verifying, before the high-level method is performed, the format of the arguments, which are required to be provided by the user mobile application for the high-level method to be performed. For example, for the Load high-level method, the following arguments are required from the user mobile application: a number of the shipment or of the article, a scanned barcode value of the shipment or of the article and a size of a compartment that needs to be used, and the firth check component is configured for verifying the format of these arguments. The firth check component is also configured for verifying the coherence of the values of the arguments depending on the configuration and environment of the electronic locker bank. A locker mapping 352 is stored in the toolbox memory and the Locker Bank Toolbox is configured to update the locker mapping with information received from the electronic locker bank or from the locker bank server. The locker mapping provides a dynamic image of the electronic locker bank status and includes information regarding the parcels in the compartments of the electronic locker bank, the accessibility of the compartments, the sizes of the compartments, as well as the formats and the format rules of the arguments associated with each high-level method.

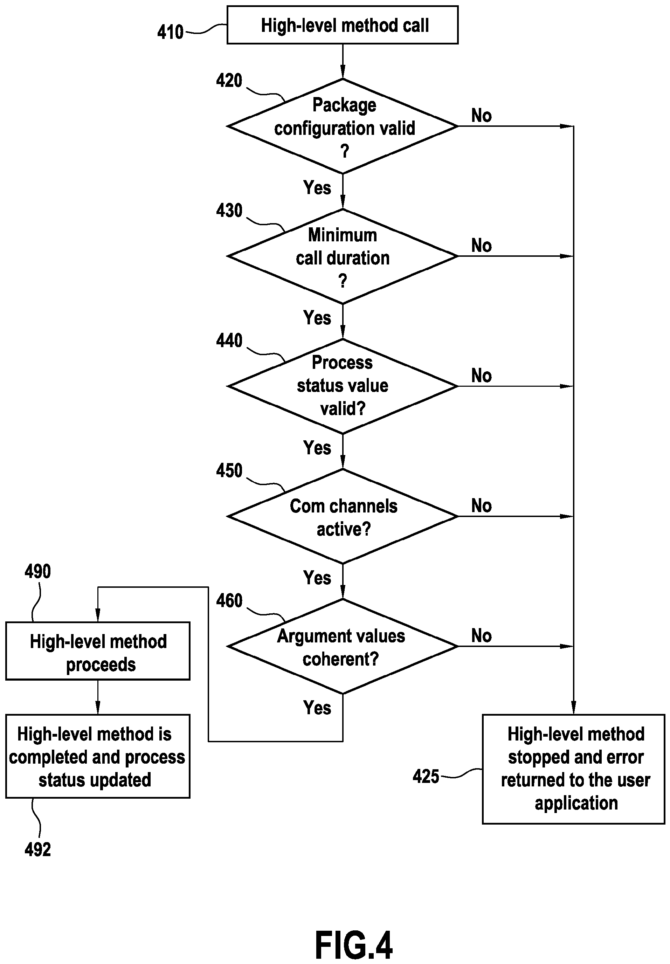

A method using a Locker Bank Toolbox for interacting with an electronic locker bank according to the invention is now described in reference to figure 4. The Locker Bank Toolbox is integrated in a user mobile application running on a mobile device integrating a short-distance communication hardware and a long-distance communication hardware. When a process of the user mobile application requires an interaction with the electronic locker bank, in step 410, the process calls a high-level method included in the Locker Bank Toolbox and provides required arguments associated with the high-level method. In order to secure a usage of a locker development kit comprised in the Locker Bank Toolbox, and hose low-level functions are used by the high-level methods, several locker development kit security checks are performed.

In step 420, the need for updating a configuration package is checked. A package date stored in a toolbox memory 330 associated with the Locker Bank Toolbox provides a date to be compared with today's date. Following on a download of the configuration package, the package date corresponds to the date of the latest download of the configuration package. The package date can be updated when a validity check of the configuration package is performed. A usage duration of the configuration package within the user mobile application is established by subtracting the package date from today's date. Then, the usage duration of the configuration package is compared with a package validity stored in the configuration package in the form of a duration. If the usage duration of the configuration package is smaller than the package validity, then the configuration package is considered valid and the call for the high-level method can proceed. Otherwise, a validity check of the configuration package is performed and the configuration package is checked as valid if at least all the following matches are verified: a name "ApplicationName" stored in the configuration package must correspond to names associated with the locker development kit and the Locker Bank Toolbox for ensuring that the configuration package correspond to the locker development kit and the Locker Bank Toolbox currently in the mobile device, and the version of the locker development kit and the version of the Locker Bank Toolbox must be larger than a value "MinVersion" stored in the configuration package and corresponding to the minimal version of the locker development kit and of the Locker Bank Toolbox. If the configuration package is checked as valid, the call for the high-level method can proceed. If the configuration package is checked as invalid, the high-level method stops and returns an error message for requesting a download of a new configuration package in step 425. The package date can be updated each time a communication is established with the locker bank server by or via the Locker Bank Toolbox. During the communication with the locker bank server, the validity of the configuration package can be checked by the locker bank server. If the locker bank server confirms that the configuration package is valid, the package date is up-dated with the value of today's date - date of the validity check.

In step 430, in order to prevent the locker development kit from being flooded by untimely requests, a check is performed to verify that enough time has elapsed between the latest time that the high-level function had been called and the time of the current call for the high-level function. The elapsed time is calculated by subtracting from the current time a time corresponding to the latest time when the high-level function had been called and being recorded in a list of call times. The list of call times stored in the toolbox memory records the latest times that each of the high-level methods has been called by the user mobile application. The calculated elapsed time is compared with a call delay stored in the configuration package. The call for the high-level method can proceed only if the calculated elapsed time is larger than the call delay, otherwise the high-level method stops and returns an error message in step 425. In a preferred embodiment, if the calculated elapsed time is larger than the call delay, the time corresponding to the latest time that the high-level function had been called is updated with the current time value in the list of call times. In a variant for step 430, for preventing the locker development kit from being flooded by untimely requests, a number of successive calls for executing the same high-level method that the user process can request is checked. A digital counter accounts for the counted number of successive calls for executing the same high-level method. This counted number is compared with a maximum number of calls associated with the high-level method and which is part of a list of maximum number of calls. The call for the high-level method can proceed only if the counted number is smaller than the maximum number of calls associated with the high-level method, otherwise the high-level method stops and returns an error message in step 425. In step 440, a value of a process status is checked. The value of the process status is set as a result of a completion of a previous high-level method, which had been called by the user mobile application. Depending on the high-level method, which is called, the process status must have a specific value for the process status to be valid and the high-level method to be allowed to proceed. The process status is valid if its value is: "null" for the high-level method Load, "load" for the high-level method LoadConfirm, "null" or "dropoffallow" for the high-level method DropOffAllow, "dropoffallow" or "dropoff" for the high-level method DropOff, "dropoff" for the high-level method DropOffConfirm, for the high-level method Unload to start the process status must have the value "null" and ends with the value "unload", "unload" for the high-level method LoadConfirm, "null" or "pickup" for the high-level method GetAuthenticator, "null" or "pickup" for the high-level method PickUp, and "pickup" for the high-level method PickUpConfirm. The call for the high-level method can proceed only if the process status has a valid value for the high-level method being called, otherwise the high-level method stops and returns an error message in step 425. In step 450, communication channels are checked whether they are active. The component of the Locker Bank Toolbox 340 checks whether the short-distance communication hardware of the mobile device is active for the Locker development kit by accessing a native function of the operating system (Android or iOS) of the mobile device, which returns a status of the short-distance communication hardware. The status of long-distance communication hardware of the mobile device is checked similarly by the component of the Locker Bank Toolbox 340. The call for the high-level method can proceed only if both the shot-distance and long-distance communication channels are active, otherwise the high-level method stops and returns an error message in step 425 so that the inactive communication channel can be activated by the user. This check of step 450 may not be performed for some high-level methods, which do not need the communication channels to be active. In step 460, coherence is checked for values of arguments associated and provided with the high-level method called by the user mobile application. The values of the arguments are checked regarding their format by comparing the format of each of the values of the arguments with formats or format rules stored in the locker mapping 352 and corresponding to each argument. In particular, the value of an argument cannot be null. The coherence of the values of the arguments is also verified depending on the configuration and environment of the electronic locker bank and based on local data such as compartment availability, which can be provided by the electronic locker bank. For example, for the Load high-level method, the size of the compartment, which can be obtained during the user process, and which is provided by the user mobile application to the Locker bank toolbox, is compared with the compartment sizes, which are available for the electronic locker bank according to a locker mapping. If no compartment with the required size is available, an incoherence is identified, and an error message is returned to the user mobile application requesting an appropriate compartment size. Each of the values of the arguments can also be checked whether it is comprised within a pre-defined range stored in the configuration package or in the locker mapping. The call for the high-level method can proceed only if the values of arguments of the high-level method are coherent, otherwise the high-level method stops and returns an error message in step 425. Once all locker development kit security checks are successfully completed, the high-level method proceeds in step 490. As part of the completion of the high-level method, the process status is update and its value is set to "load" for the high-level method Load, "null" for the high-level method LoadConfirm, "dropoffallow" for the high-level method DropOffAllow, "dropoff" for the high-level method DropOff, "null" for the high-level method DropOffConfirm, "null" for the high-level method LoadConfirm, "pickup" for the high-level method GetAuthenticator, "pickup" for the high-level method PickUp, and "null" for the high-level method PickUpConfirm.

## Claims

1. A locker bank system for an item deposit and collection comprising:
- an electronic locker bank (100, 202) comprising a controller system (220) configured to manage a compartment (120i) equipped with an electronically controlled door (122i) for securing a temporary storage of said item communicating with a first mobile device (204) via a short-distance communication network (206),
- a locker banks server (250) communicating with said first mobile device via a long-distance communication network (252),
**characterized in that** said first mobile device comprises a user mobile application (230) integrating a locker bank toolbox (234, 302) packaging all required components for allowing for said first mobile device to interact with said electronic locker bank, wherein said locker bank toolbox comprise a high-level methods pack (236, 306) configured to be called by said user mobile application, and wherein said locker bank toolbox can be integrated into or removed from said user mobile application without impacting said user mobile application other than for interacting with said electronic locker bank.

2. The locker bank system according to claim 1, wherein said electronic locker bank includes a locker development kit (238, 308) comprising low-level components (240, 242, 244, 310, 312, 314, 316) configured to be called by said high-level method for allowing interaction with said electronic locker bank and wherein said locker development kit comprises a short-distance communication module (242, 312) for said first mobile device to communicate wirelessly with said electronic locker bank via said short-distance communication network (206) and said locker development kit comprises a long-distance communication module (244, 314) for said first mobile device to communicate with said locker banks server via said long-distance communication network (252) allowing for the download of a configuration package (326) from said locker banks server to said first mobile device.

3. The locker bank system according to claim 1 or claim 2, wherein said locker bank toolbox includes a package verification component (324) configured to stop an execution of said high-level methods pack based on a package validity parameter (328) stored in said configuration package and based on a package date (329) stored in a toolbox memory (330) associated with said locker bank toolbox.

4. The locker bank system according to claim 3, wherein said locker bank toolbox includes a flood protection component (332) configured to stop an execution of said high-level methods pack based on a call delay (334) stored in the configuration package and based on a list of call times (335) stored in the toolbox memory.

5. The locker bank system according to claim 3, wherein said locker bank toolbox includes a process component (336) configured to stop an execution of said high-level methods pack based a process status (338) stored in said toolbox memory and configured to update said process status when said high-level method is completed.

6. The locker bank system according to any one of claims 1 to 5, wherein said locker bank toolbox includes a communication channels component (340) configured to verify whether said short-distance communication module and said long-distance communication module are operational and configured to stop an execution of said high-level method if said high-level methods pack requires using said short-distance communication network or said long-distance communication network.

7. The locker bank system according to any one of claims 1 to 6, wherein said locker bank toolbox includes an argument verification component (350) configured to verify a coherence of values of arguments associated with said high-level methods pack and provided by said user mobile application compared to a locker mapping (352) stored in said toolbox memory.

8. The locker bank system according to any one of claims 1 to 7, wherein said locker bank toolbox and said locker development kit are developed in a native software language, wherein said native software language is SWIFT or KOTLIN and wherein said locker bank toolbox and said locker development kit are provided as a pre-compiled binary file for future compilation with a user mobile application.

9. The locker bank system according to any one of claims 1 to 8, wherein a second mobile device (208) comprises a locker bank application (270) integrating said locker development kit (238, 274), wherein said low-level components are configured to be called by said locker bank application.

10. The locker bank system according to any one of claims 1 to 9, wherein said controller system includes a short-distance communication interface (224) for communicating with said first mobile device and said second mobile device and wherein each of said locker development kit and said electronic locker bank comprises a security module (226, 243) for encrypting and decrypting messages, and said security module of said locker development kit is configured for encrypting requests from said locker development kit to said electronic locker bank, and said security module of said electronic locker bank is configured for encrypting responses from said electronic locker bank to said locker development kit.

11. A method for the locker bank system according to any one of claims 1 to 10 including:
- calling a high-level methods pack (306) included in a locker bank toolbox and providing arguments associated with said high-level methods pack,
- checking (420) for validity of a configuration package (326),
- checking (430) that an elapsed time from a latest time when the high-level function had been called is larger than a pre-stored call delay,
- checking (440) for a value of a process status (338) by comparing said value of said process status with a process value associated with said high-level method, and
- if any of the three previous checkings is unsuccessful, stopping the execution of said high-level methods pack and returning an error message.

12. The method according to claim 11, further comprising:
- checking (450) whether a short-distance communication module (242) for said first mobile device to communicate wirelessly with said electronic locker bank via said short-distance communication network and a long-distance communication module (244) for said first mobile device to communicate with said locker banks server via said long-distance communication network are operational,
- checking (460) for coherence for values of arguments associated and provided with said high-level method, and
- if any of the two previous checkings is unsuccessful, stopping the execution of said high-level methods pack and returning an error message.

13. The method according to claim 11, wherein said checking for validity of a configuration package includes:
- establishing a usage duration of said configuration package by subtracting from today's date a package date (329) stored in a toolbox memory (330) associated with said electronic locker bank,
- comparing said usage duration with a package validity (328) stored in said configuration package, and
- establishing that the package is valid if said usage duration is smaller than said package validity.

14. The method according to claim 12, wherein said checking for communication channels includes:
- accessing an API of an operating system of said mobile device for checking whether said short-distance communication module is active,
- returning a status of said short-distance communication network,
- accessing an API of an operating system of said mobile device for checking whether said long-distance communication module is active, and
- returning a status of said long-distance communication network.

15. The method according to claim 12, wherein said checking for coherence for values of arguments includes:
- comparing a format of each of said values of said arguments with pre-stored formats or format rules, or
- verifying a coherence of said values of said arguments compared to a pre-stored locker mapping (352), or
- checking whether each of said values of said arguments is comprised within a pre-defined range.
